# EUROPÄISCHE PATENTSCHRIFT

(11) **EP 1 289 649 B1**
(45) Veröffentlichungstag und Bekanntmachung des Hinweises auf die Patenterteilung: **04.04.2007**
(21) Anmeldenummer: 01945178.0
(22) Anmeldetag: 21.05.2001
(51) Int. Cl.: B01J 19/24, B01F 5/02, C07C 263/10

(54) **VERFAHREN UND VORRICHTUNG ZUR KONTINUIERLICHEN HERSTELLUNG VON ORGANISCHEN MONO-ODER POLYISOCYANATEN**
METHOD AND DEVICE FOR THE CONTINUOUS PRODUCTION OF ORGANIC MONO OR POLYISOCYANATES
PROCEDE ET DISPOSITIF DE PRODUCTION EN CONTINU DE MONO- OU DE POLYISOCYANATES ORGANIQUES

(30) Priorität: 26.05.2000 DE 10026142
(43) Veröffentlichungstag der Anmeldung: 12.03.2003
(73) Patentinhaber: BASF Aktiengesellschaft, 67056 Ludwigshafen (DE)
(72) Erfinder: WÖLFERT, Andreas, 74906 Bad Rappenau (DE); PENZEL, Ulrich, 01945 Tettau (DE)
(74) Vertreter: Isenbruck, Günter
(86) Internationale Anmeldenummer: PCT/EP2001/005818
(87) Internationale Veröffentlichungsnummer: WO 2001/091898

(56) Entgegenhaltungen:
- EP-A- 0 271 684
- EP-A- 0 372 483
- WO-A-97/21535
- DD-A- 300 168
- DE-A- 3 630 097
- GB-A- 448 489
- GB-A- 901 377
- US-A- 5 763 697

## Beschreibung

Die Erfindung bezieht sich auf ein Verfahren und eine Vorrichtung zur kontinuierlichen Herstellung von organischen Mono- oder Polyisocyanaten durch Umsetzen der den Mono- oder Polyisocyanaten entsprechenden Mono- oder Polyaminen mit Phosgen bei erhöhter Temperatur, wobei die Amine oder das Phosgen in organischem Lösungsmittel gelöst vorliegen können.

DE 2 153 268 bezieht sich auf ein kontinuierliches Vorphosgenisierungsverfahren für die Herstellung von organischen Isocyanaten. Eine in Turbulenz befindliche Phosgenlösung und Diaminlösung werden kontinuierlich in einer angetriebenen Kreiselpumpe gemischt. Die Phosgenlösung wird durch den Saugstutzen der mehrstufigen Kreiselpumpe und die Aminlösung in den in der Mitte zwischen dem ersten und zweiten Kreisel zusätzlich angebrachten seitlichen Zugang in die Kreiselpumpe eingegeben, bevor das Vorphosgenisierungsgemisch durch die mehrstufige Kreiselpumpe in eine nachgeschaltete Heißphosgenisierungsstufe gefördert wird.

EP 0 291 891 B1 betrifft ein Verfahren zur Herstellung von Isocyanaten. Es werden Lösungen und Suspensionen primärer Amine und deren Salze mit Phosgenlösungen vermischt und umgesetzt, wobei die beiden Stoffe in eine Mischzone eingebracht werden, die mindestens eine Rotorscheibe aufweist. Das entstandene Vorprodukt wird wieder ausgeführt, die weitere Umsetzung der entstandenen Primärprodukte erfolgt unter Erhitzen. Bei der Durchführung des Vermischens wird die Phosgenlösung axial zur Rotorscheibe zugeführt und das gelöste Amin parallel zum Strom, aber mit Abstand vom Strom der Phosgenlösung gegen die Rotorscheibe verdüst.

Bei den Mischungsverfahren mit bewegten Teilen, zu denen die oben skizzierten Lösungen zu zählen sind, stellen die Lagerungsstellen der bewegten Teile wegen der hohen Toxizität des Phosgens eine potentielle Gefahrenquelle dar, da durch diese Phosgen bei Leckagen entweichen kann. Daher wurde nach Verfahrensweisen gesucht, die Vermischung von Mono- oder Polyaminen ohne bewegte Teile zu erreichen.

Aus EP 0 322 647 B1 ist ein Verfahren zur kontinuierlichen Herstellung von Mono- oder Polyisocyanaten bekannt, bei dem zur Herstellung der Ausgangsgemische die gegebenenfalls in einem inerten Lösungsmittel gelöste Aminkomponente und die Phosgenlösung in einer Düse zusammengeführt werden, indem die eine der beiden Komponenten in dieser Düse eingeschnürt wird und die andere Komponente in diese-Einschnürung dem Strom der ersten Komponente in mehreren Teilströmen durch eine entsprechende Anzahl von über den Umfang der Einschnürung verteilten Bohrungen von der Seite her zugeführt wird. Die Gesamtlänge der Einschnürung ist so gewählt, daß sie eine Teillänge umfaßt, in welcher die Reaktion des freien Amins im Wesentlichen abgeschlossen ist. Der Nachteil bei dieser Anordnung ist darin zu erblicken, daß geringste Feststoffanlagerungen in einzelnen Löchern zu einem geringeren Durchfluß durch diese führen können.

Aus DE-OS 29 50 216 A1 ist ein Verfahren und eine Vorrichtung zum innigen Vermischen zweier Flüssigkomponenten bekannt geworden. Die erste Komponente wird unter Druck in Form eines fächerförmigen Spritzstrahles in eine im Wesentlichen zylindrische Mischkammer in deren Längsachse strömend eingeführt. Senkrecht dazu wird gleichzeitig die zweite Komponente unter Druck in Form von mindestens zwei fächerförmigen Spritzstrahlen in den Spritzstrahl der ersten Komponente, in deren Strömungsbereich eingeführt. Anschließend wird das entstehende Gemisch der beiden flüssigen Komponenten aus der Mischkammer in eine nachgeschaltete Reaktionszone geführt. Aufgrund der hohen Vordrücke, die für das Verfahren notwendig sind, erscheint das Verfahren jedoch unbefriedigend.

SU 519 129 zeigt ein Produktionsverfahren für die Isocyanatherstellung. Es wird ein Produktionsverfahren für Isocyanate vorgestellt, wobei Phosgen gasförmig am Boden eines Reaktors bei Temperaturen zwischen 100°C und 180°C zugeführt wird, welches auf ein Aminsalz trifft, das im oberen Bereich des Reaktors zugeführt wird. Das Aminsalz wird bei Temperaturen zwischen 40°C und 100°C dem oberen Bereich des Reaktors zugeführt. Aus US 3,507,626 ist eine Venturimischeinrichtung bekannt. Diese Mischeinrichtung ist speziell zum Mischen von Phosgen mit Amin ausgelegt, sodass sich Isocyanate herstellen lassen und umfasst einen ersten und einen zweiten Einlass sowie einen Auslass. Ein erster Leitungsabschnitt umfasst eine Venturisektion mit einem konvergierenden Abschnitt, einer Engstelle und einem divergierenden Abschnitt. Ein zweiter Abschnitt ist koaxial im ersten Leitungsabschnitt aufgenommen und fungiert als erster Einlass. Der zweite Leitungsabschnitt umfasst eine Anschrägung, welche zum konvergierenden Abschnitt korrespondiert. Der zweite Leitungsabschnitt mündet in eine Mischkammer, die sich um die Venturi-Sektion des ersten Leitungsabschnittes erstreckt. Die Mischeinrichtung sichert das Mischen und verhindert das Verstopfen durch die Bildung von Nebenprodukten.

DE-AS 17 92 660 B2 bezieht sich auf ein Verfahren und eine Vorrichtung zum Mischen und Umsetzen eines Amins mit Phosgen zu einem Isocyanat. Gemäß dieses Verfahrens werden Amin und Phosgen koarxial zueinander geführt und miteinander gemischt, wobei die beiden Strömen von Amin und Phosgen ring- bzw. kegelförmig ausgebildet sind, sich an einer spitzwinklig einer Kreuzungs-Mischungsstelle schneiden und unmittelbar vor, an und nach dieser Kreuzungsstelle der Eintritt in einen weiteren Reaktionsraum beschleunigt werden, sodass eine Rückströmung von Isocyanat in den Aminstrom vermieden wird. Dies wird gemäß DE-AS 17 92 660 B2 durch eine Vorrichtung ermöglicht, bei der im hohlen Schaftabschnitt eines T-förmigen Gehäuses ein Einlass für das Phosgen und im hohlen Querbalkenabschnitt des Gehäuses ein Durchgang für das Amin vorgesehen ist, in dem ein zylindrisches Glied angeordnet ist, welches das eine Ende dieses Durchgang verschließt und im anderen Ende dieses Durchgangs einen Reaktionsbereich festlegt. Das zylindrische Glied weist an seinem, den Durchgang verschließenden Ende einen Einlass für Amin in das Gehäuse auf, wobei dieses eine Einrichtung zur Einstellung der Strömungsgefündigkeit des Amins umfasst, deren dem Reaktionsbereich zugewandtes Ende einen Abschnitt mit sich verringernden Profil aufweist, der von dem Reaktionsbereich zugewandten Endabschnitt des zylindrischen Glieds einen vorbestimmten Abstand besitzt. Dieser Abschnitt lenkt den in das zylindrische Glied eintretenden Aminstrom in einem Winkel von der Außenfläche des Profilabschnittes weg und neben dem Reaktionsbereich unter einem Winkel quer über dem Durchgang gerichteten Strom um. Der Aminstrom, welcher durch den Durchgang strömt, der durch den Endabschnitt des zylindrischen Glieds verengt ist, schneidet das aus dem Reaktionsbereich einströmende Phosgen unter einem Winkel.

EP 0 830 894 A1 bezieht sich auf einen Mischer-Reaktor und ein Verfahren zur Durchführung von Reaktionen, insbesondere die Phosgenisierung von primären Aminen. Bei diesem Mischer-Reaktor ist vorgesehen, die Verstopfung von rotationssymmetrisch zur Mischkammer angeordneten Düsen dadurch zu verhindern, daß ein in Richtung der Düsenachse verschiebbarer Bolzen zugeordnet ist. Bewegliche Teile an Phosgen umsetzenden Reaktoren stellen jedoch potentielle Leckagestellen dar und sind daher möglichst zu vermeiden.

Angesichts der aufgezeigten Lösungen aus dem Stand der Technik liegt der Erfindung die Aufgabe zugrunde, ein Verfahren zur Phosgenisierung von Aminen anzugeben, welches weniger Lösungsmitteleinsatz und weniger Phosgenüberschuß benötigt und bei dem weniger Nebenprodukte entstehen.

Diese Aufgabe wird erfindungsgemäß dadurch gelöst, daß bei einem Verfahren zur Vermischung von Eduktströmen in einem Mischer zur Phosgenisierung von Aminen, bei dem das Reaktionsproduld geschlossen abgeführt wird und die Eduktströme organische Lösungsmittel enthalten können, Hauptströme und/oder Teilströme der Edukte nach dem Gegenstromprinzip aufeinandertreffen.

In völliger Abkehr von dem in der Fachwelt vorherrschenden Meinung, entsteht bei dem direkten Aufeinanderzuführen der Eduktstrahlen die geringste Nebenkomponentenbildung. Durch die gewählte Strömungsführung der in flüssiger Phase vorliegenden Edukte Amin und Phosgen kann eine maximale Vermischungsintensität erreicht werden, da der Impuls der beiden aufeinander treffenden Strahlen der Flüssigphasen der Edukte vollständig in Vermischungsenergie umsetzbar ist und von außen keine weitere Energiezufuhr mehr erforderlich ist. Der Effekt der schnellen Vermischung durch Maximierung der Vermischungsintensität überwiegt den Effekt der Rückvermischung, die als Ursache für die Nebenproduktbildung angesehen wird, bei weitem, so daß der Bildung unerwünschter Nebenprodukte beim Aufeinandertreffen der beiden Komponenten weitestgehend die Basis entzogen ist.

In Weiterführung des der Erfindung zugrundeliegenden Gedankens ist das Gegenstromprinzip bei der Mischung der Eduktströme bei Zuführwinkeln, die größer als 90° betragen, bewahrt, so daß den Eduktstrahlen eine axial gerichtete Geschwindigkeitskomponente jeweils innewohnt. Die Edukthauptströme lassen sich von Eduktteilströmen der jeweils anderen zu mischenden Komponente ummantelt zuführen, so daß sich beispielsweise ein leichter Phosgenüberschuß einstellen läßt, der Ablagerungen im Bereich der Ableitungen des Reaktionsproduktes aus der Mischzone der Zuführkanäle vermeiden hilft.

Es ist denkbar, daß sowohl der Hauptstrom des ersten Eduktes von einem Teilstrom des zweiten Eduktes ummantelt ist als auch der Hauptstrom des zweiten Eduktes von einem Teilstrom des ersten Eduktes ummantelt sein kann.

Durch gezielte Vorwahl des Impulsverhältnisses der Impulse von Aminstrahlen als erstem Eduktstrom zu Phosgenstrahlen als zweitem Eduktstrom auf >1 liegend, lassen sich Ablagerungen an der Innenseite der Einführkanäle vermeiden, unabhängig davon, ob das Edukt im Unterschuß oder im Überschuß vorliegt.

Die Ableitung des Reaktionsproduktes aus der Mischzone innerhalb der Zuführkanäle kann einerseits durch eine radiale Ableitung erfolgen oder auch durch einen in einen bestimmten Winkel geneigte Ableitung vonstatten gehen.

Mittels der erfindungsgemäß weiterhin vorgeschlagenen Vorrichtung zum Mischen zweier Eduktströme in ihrer jeweils flüssigen Phase lassen sich die Hauptströme zweier Edukte gezielt aufeinander zuleiten, so daß der jeweilige Impuls vollständig in Vermischungsenergie umsetzbar ist. In bevorzugter Ausgestaltung der Vorrichtung können die die Hauptströme der Edukte aufnehmenden Zuführkanäle von einem Ringspalt jeweils umgeben sein. Die Öffnungen der , Ringspalte können einander gegenüberliegend positioniert im Bereich der Ableitung des Reaktionsproduktes münden. Durch Optimierung der Ringspaltöffnungen durch Verkürzungen einer die Ringspaltmündung begrenzenden Fläche läßt sich das Anlagern von Edukten an den Eduktströmen jeweils zugewandten Flächen der Zuführkanäle wirksam vermeiden..

Anhand der Zeichnung wird die Erfindung nachstehend näher erläutert.

Es zeigt:
- Fig. 1: die schematisch dargestellte Konfiguration eines Y-Mischers,
- Fig. 2: die Gegenstrommischung bei axialer Ableitung des entstehenden Reaktionsproduktes,
- Fig. 3: die Gegenstrommischung bei Aufteilung eines Eduktstromes in Haupt- und Teileduktstrom,
- Fig. 4: die Gegenstrommischung mit einem einen Zuführkanal ummantelnden Ringspalt mit verkürztem innerem Zylinder,
- Fig. 5: die Gegenstrommischung mit radialer Ableitung des entstehenden Reaktionsproduktes,
- Fig. 6: die Ummantelung beider Edukthauptströme mit Eduktteilströmen der jeweils anderen Komponente und
- Fig. 7: die Gegenstrommischung mit allgemein geneigter Ableitung für das Reaktionsprodukt.

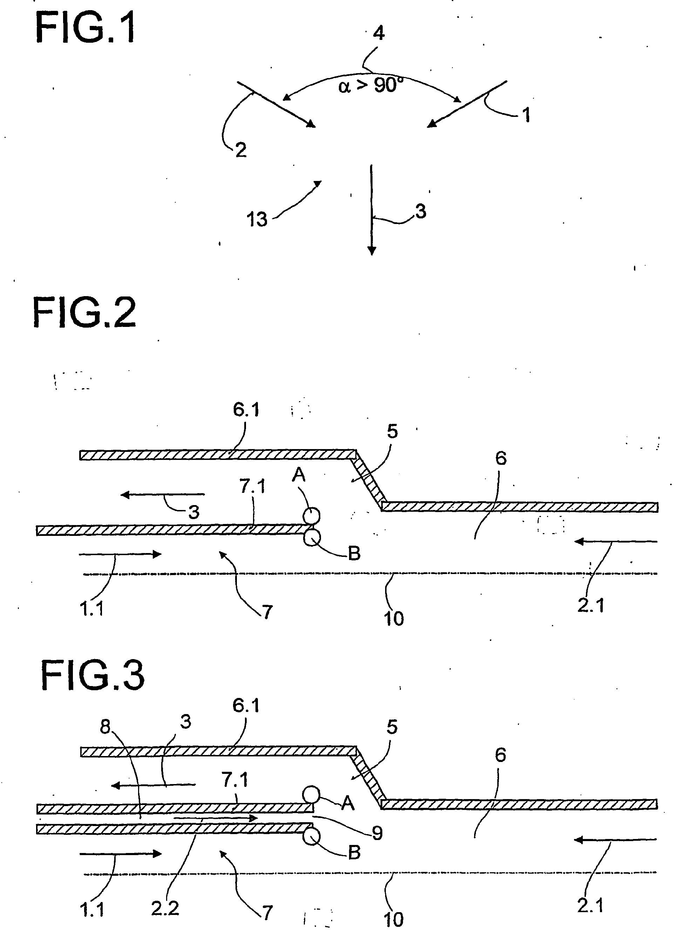

Aus der Darstellung gemäß Fig. 1 geht die schematische Anordnung eines Y-Mischers 13 hervor. Unter einem Zuführwinkel 4, der größer als 90° ist, werden ein erster Eduktstrom 1 und ein zweiter Eduktstrom 2 zugeführt. Das entstehende Reaktionsprodukt 3 wird geschlossen in eine Raumrichtung sich in den unteren Bereich der dargestellten Mischerkonfiguration 13 erstreckend abgeführt.

Fig. 2 zeigt die Gegenstrommischung zweier Eduktströme mit im Wesentlichen in axialer Richtung verlaufender Ableitung des Reaktionsproduktes.

In der in Fig. 2 dargestellten Ausführungsvariante strömt ein Hauptstrom 2.1 des zweiten Eduktes innerhalb eines Zuführkanals 6 ein, während der Strömungsrichtung des Hauptstroms 2.1 entgegengesetzt der Hauptstrom 1.1 des ersten Eduktes 1 in einem Zufuhrkanal direkt entgegenströmt. Die beiden Zuführkanäle 6 und 7 sind in der dargestellten Ausführungsvariante beispielsweise symmetrisch zu einer Symmetrieachse 10. In der Mischzone der beiden Hauptströme 2.1 und 1.1 der Edukte 1 bzw. 2 zweigt eine Ableitung 5 ab, die durch eine Begrenzungswand 6.1 einerseits und durch eine Trennwand 7.1 zum Zuführkanal 7 des ersten Edukthauptstroms 1.1 getrennt ist. Die Ableitung 5 erstreckt sich im Wesentlichen in axialer Richtung parallel zu den dargestellten Zuführkanälen 6 und 7 für die jeweiligen Edukthauptströme 1.1 bzw. 2.1 und leitet das aus der Vermischung der beiden Edukthauptströme 1.1 und 2.1 gebildete Reaktionsprodukt 3 ab. In der in Fig. 2 dargestellten Ausführungsvariante beträgt der Zuführwinkel 4 der beiden Edukthauptströme 2.1 bzw. 1.1 des ersten bzw. zweiten Eduktes etwa 180°, so daß durch die hier verwendete Strömungsführung durch Aufeinandertreffen der beiden Strahlen deren Impuls zur Erzielung einer maximalen Vermischungsintensität und der Erzeugung maximaler Vermischungsenergie genutzt werden kann. An der Trennwandung 7.1, die den Zuführkanal 7 des ersten Edukthauptstromes 1.1 von der Ableitung 5 des Reaktionsproduktes 3 trennt, sind mit den Buchstaben A und B, die für die Ablagerung von Reaktionskomponenten kritischen Stellen markiert.

Aus der Darstellung gemäß Fig. 3 geht die Gegenstrommischung bei Aufteilung eines der Eduktströme in einen Haupt- und einen Teilstrom hervor.

Gemäß dieser Ausführungsvarianten einer Mischeinrichtung zur Mischung zweier Eduktströme strömt der Hauptstrom 1.1 der ersten Eduktes in einen Zuführkanal 7, der jedoch zu der Ableitung 5, durch welche das Reaktionsprodukt 3 die Mischzone verläßt, nicht durch eine Trennwandung 7.1 gemäß Fig. 2, sondern durch einen Ringspalt 8 abgetrennt ist. Durch den Ringspalt 8 strömt ein Teilstrom 2.2 des zweiten Eduktes, so daß sich im Bereich der Ringspaltöffnung 9 des Ringspaltes 8 ein Phosgen, im vorliegenden Fall ein Phosgenüberschuß, einstellen läßt. Durch die Einstellung des Phosgenüberschusses im Bereich der Abzweigung der Ableitung 5 von den Zuführkanälen 6 und 7 läßt sich ein Aufbau von Ablagerungen an der mit A bezeichneten Stelle des Ringspaltes A, d.h. einer Begrenzungwand der Ableitung 5 vermeiden. Es hat sich herausgestellt, daß sich durch eine Erhöhung des Impulses des Hauptstromes 1.1 des ersten Eduktstromes im Vergleich zum Impuls des Hauptstromes 2. 1 des zweiten Eduktes an der Stelle B, d.h. daß sich an der Innenseite des Zuführkanales 7 der Aufbau von Ablagerungen vermeiden läßt. Die Vermeidung von Ablagerungen an der an mit B bezeichneten Stelle des Zuführkanales 7 kann durch die Erhöhung des Impulses des Hauptstromes 1.1 des ersten, Eduktes unabhängig davon erfolgen, ob diese Komponente im Überschuß oder im Unterschuß vorliegt.

Auch in der in Fig. 3 gezeigten Ausführungsvariante sind die Zuführkanäle 6 bzw. 7 für den Hauptstrom 1.1 des ersten Eduktes sowie den Hauptstrom 2.1 des zweiten Eduktes symmetrische zu einer Symmetrieachse 10 ausgebildet. Neben einer rotationssymmetrischen Ausbildung der Zuführkanäle lassen sich in diesen selbstverständlich auch andere Querschnitte realisieren.

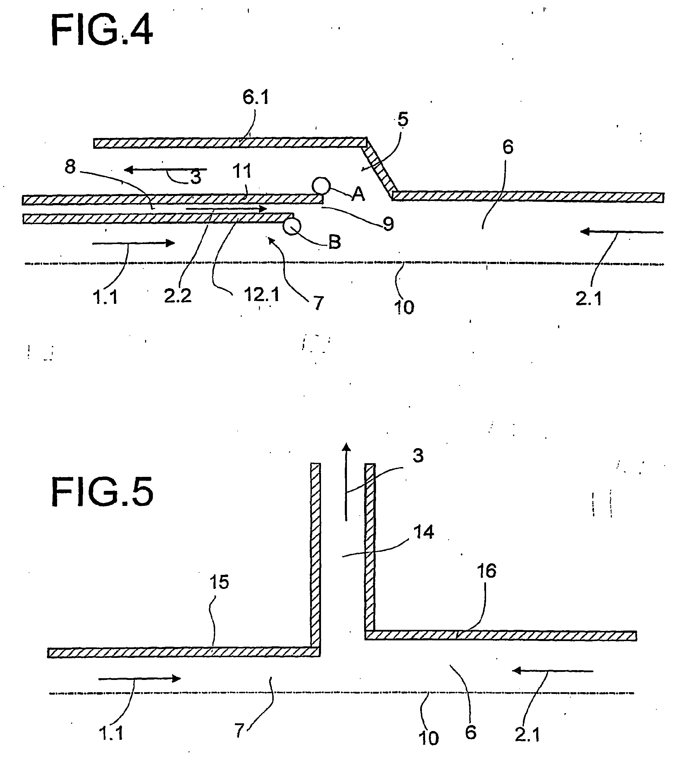

Fig. 4 zeigt die Gegenstrommischung mit einem einen Zuführkanal ummantelnden Ringspalt mit verkürztem inneren Zylinder.

In der in Fig. 4 dargestellten Ausführungsvariante befindet sich - etwa vergleichbar zur Ausführungsvariante gemäß Fig. 3 - zwischen der Ableitung 5 für das Reaktionsprodukt 3 und den Zuführkanal 7 für den Hauptstrom 1.1 des ersten Eduktes ein Ringspalt 8. Durch den Ringspalt 8 wird ein Teilstrom 2.2 des zweiten Eduktes der Mischzone der beiden Hauptströme 1.1 bzw. 2.1 der Edukte 1 und 2 zugeführt, so daß in der Mischzone ein Phosgen, im vorliegenden Fall ein Phosgenüberschuß, vorliegt. Durch die Einstellung des Phosgenüberschusses durch die Zufuhr eines Phosgenteilstromes 2.2 via Ringspalt 8 lassen sich Ablagerungen, markiert mit A, im Bereich der Ableitung 5 vermeiden, während durch die verkürzte Ausführung der der Symmetrieachse 10 zugewandten Fläche des Zuführkanales 7 Ablagerungen an der mit B bezeichneten Stelle im Bereich der Ringspaltöffnung 9 wirksam verhindert werden können. In der Ausführungsvariante gemäß Fig. 4 ist die die Ableitung begrenzende Wandung 6.1 nur schematisch wiedergegeben. Zur Optimierung der Strömungsverhältnisse kann der Übergang des Zuführkanales 6 in die Ableitung und die sich daran anschließende Ableitung mit gut gerundeten, die Strömung möglichst wenig behindernden Kanten ausgeführt werden.

Es soll nicht unerwähnt bleiben, daß in die Zuführkanäle 6 für den Hauptstrom 2.1 des zweiten Eduktes sowie in den Zuführkanal 7 für den Hauptstrom 1.1 des ersten Eduktes Drall erzeugende Elemente eingebaut werden können. Während der Vermischung kann die beim Abbau des Dralls in der Mischzone frei werdende Mischenergie zur Beschleunigung des Vermischungsvorganges verwendet werden. Als ein Drall erzeugendes Element wäre beispielsweise ein tordiertes Band oder Spirale in die jeweiligen Zuführkanäle 6 und 7 für die Hauptströme 2.1 bzw. 1.1 der beiden Edukte einzulassen.

In der Darstellung gemäß Fig. 4 ist die Gegenstrommischung zweier Eduktströme mit radialer Ableitung des Reaktionsproduktes dargestellt.

In der in Fig. 5 dargestellten Ausführungsvariante sind die Zuführkanäle 6 bzw. 7 für die Hauptströme 2.1 und 1.1 der beiden Edukte 1 bzw. 2 jeweils rotationssymmetrisch zu einer Symmetrieachse 10 ausgebildet. In der in Fig. 5 dargestellten Konfiguration weist der Zuführkanal 6 für den Hauptstrom 2.1 des zweiten Produktes einen größeren Durchmesser 16 auf, verglichen mit dem Zuführkanal 7 für den Hauptstrom 1.1 des ersten Eduktes. Die beiden Zuführkanäle 6 bzw. 7 münden in eine beiden gemeinsamen radialen Ableitung, die verglichen zur Symmetrieachse 10 der Zuführkanäle 6 bzw. 7 exakt senkrecht angeordnet ist und einen senkrechten Austrag des Reaktionsproduktes erlaubt.

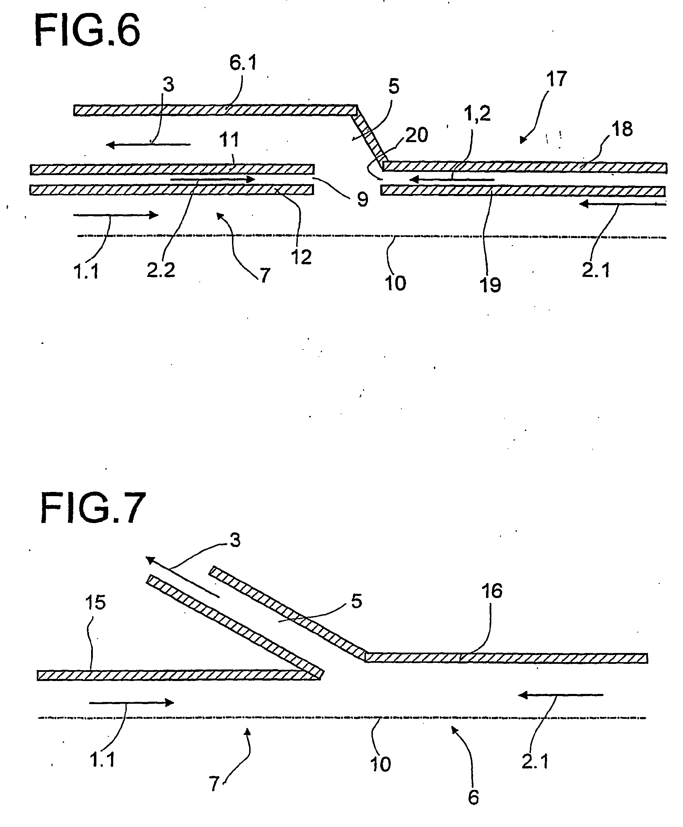

In der Darstellung gemäß Fig. 6 ist eine Gegenstrommischung zweier Eduktströme unter Ummantelung beider Edukthauptströme mit Eduktteilströmungen der jeweils anderen Komponente wiedergegeben.

Analog zu den im Zusammenhang mit Fig. 3 und mit Fig. 4 beschriebenen Ausführungsvarianten wird die Ableitung 5, durch welche das Reaktionsprodukt 3 die Mischzone verläßt, in der Ausführungsvariante gemäß Fig. 6 durch einen Ringspalt 8 getrennt. Der Ringspalt 8 wird jeweils durch ein Außenrohr 11 sowie ein Innenrohr 12 begrenzt, welche in der dargestellten Ausführungsvariante in die Ringspaltöffnung münden, wobei sowohl Außenrohr als auch Innenrohr gleich lang ausgebildet sind und einen Teilstrom 2.2 des zweiten Eduktes der Mischzone zu leiten. In der Ausführungsvariante gemäß Fig. 6 ist darüber hinaus die Außenwandung des Zuführkanals 6 als weiterer Ringspalt 17 ausgebildet. Der Ringspalt besteht aus einem Außenrohr 18 und einem Innenrohr 19 und mündet in die Ringspaltöffnung 9, des ersten Ringspaltes 8 gegenüberliegend mit in der Ringspaltöffnung 20 in der Mischzone der beiden aufeinander zugeführten Hauptströme 2.1 des zweiten Eduktes und 1.1 des ersten Eduktes. Das Außenrohr 18 des weiteren Ringspaltes 17 geht in die Begrenzungswand 6.1 der Ableitung 5 für das Reaktionsprodukt 3 über, wobei die Übergänge mit die Strömungsverhältnisse begünstigenden gerundeten Kanten ausgeführt sein können.

In der Ausführungsvariante gemäß Fig. 7 ist eine Gegenstrommischung mit einer um einen Winkel geneigten Ableitung für das Reaktionsprodukt dargestellt.

Auch in dieser Ausführungsvariante gemäß Fig. 7 wird durch einen Zuführkanal 6 ein Hauptstrom 2.1 eines zweiten Eduktes einer Mischzone zugeleitet, der ebenfalls durch den Zuführkanal 6 begrenzt durch die Außenwandung 15 ein Hauptstrom 1.1 des ersten Eduktes zugeleitet wird. Im Bereich der Mischzone zweigt eine Ableitung 5 für das Reaktionsprodukt 3 ab, welcher unter einem Winkel von α = 30° in Bezug auf die Symmetrieachse 10 angeordnet sein kann. Neben der in Fig. 7 dargestellten Neigung der Ableitung 5 sind weitere Übergangsformen zwischen einer axialen Ableitung gemäß der Reaktionsprodukte 3 gemäß der Darstellung in den Figuren 2 und 3 und der radial orientierten Ableitung 14 gemäß Fig. 5 denkbar.

Mit den in den vorbeschriebenen Ausführungsvarianten dargestellten Mischerkonfigurationen kann eine Vermischung unter besonders effektiver Ausnutzung der kinetischen Energie der Fluidströme erfolgen. Durch die Art der Vermischung kommt es zu besonders intensivem Kontakt zwischen Edukten, da die den Eduktstrahlen innewohnende Energie vollständig in Vermischungsenergie umgesetzt werden kann. Die resultierenden hohen Mischungsintesitäten drängen die Nebenproduktbildung weitestgehend zurück und erlauben mittels des erfindungsgemäßen Verfahrens und der erfindungsgemäß vorgeschlagenen Vorrichtung zum Mischen zweier Ströme die Vorteile einer hohen Betriebssicherheit, die Vermeidung bewegter Teile sowie das Erzielen hoher Ausbeuten. Hohe Phosgenüberschüsse sowie hohe Lösungsmittelanteile, in welchen das Phosgen bzw. die umzusetzenden Amine gelöst werden müssen, lassen sich vermeiden, was einer späteren Aufarbeitung der Edukte des Reaktionsproduktes günstig ist. Als Ausführungsbeispiel sei genannt, daß 420 kg/h 2,4 Toluylendiamin (TDA) als Lösung in 2450 kg/h o-Dichlorbenzol (ODB) vorgemischt werden und zusammen mit 8100 kg/h einer 65%-igen Phosgenlösung in einem T-Mischer eingedüst wurden. Die Eintrittsdurchmesser des T-Mischers wurden so gewählt, daß sich eine mittlere Eintrittsgeschwindigkeit der Phosgen- und Aminlösungsstrahlen von etwa 10 m/s ergab. Nach Klarphosgenieren und destillativer Aufbereitung ergab sich eine Ausbeute von 96,4 %.

Bei gleichen Mengenströmen und Eintrittsgeschwindigkeiten und Verwendung eines Y-Mischers 13 mit einem Zuführwinkel 4 zwischen den beiden Zuführungen von etwa 120° ergab sich nach Klarphosgenieren und destillativer Aufbereitung eine Ausbeute von 95,3 %. Ebenfalls bei gleichen Mengenströmen und Eintrittsgeschwindigkeiten und Verwendung eines Gegenstrommischers mit radialer Ableitung 14 des Reaktionsproduktes 3 ergab sich nach Klarphosgenieren und destillativer Aufbereitung eine Ausbeute von 97,4 %.

### Bezugszeichenliste

- 1: erster Eduktstrom
- 1.1: Hauptstrom
- 1.2: Teilstrom
- 2: zweiter Eduktstrom
- 2.1: Hauptstrom
- 2.2: Teilstrom
- 3: Reaktionsprodukt
- 4: Zuführwinkel
- 5: Ableitung
- 6: Zuführkanal Edukt 2
- 6.1: Begrenzungswand
- 7: Zuführkanal Edukt 1
- 7.1: Trennwandung
- 8: Ringspalt
- 9: Ringspaltöffnung
- 10: Symmetrieachse
- 11: Außenrohr
- 12: Innenrohr
- 12.1: verkürztes Innenrohr
- 13: Y-Mischerkonfiguration
- 14: radiale Ableitung
- 15: Außenwand Eduktkanal 7
- 16: Außenwand Eduktkanal 5
- 17: weiterer Ringspalt
- 18: Außenrohr
- 19: Innenrohr
- 20: Ringspaltöffnung

## Patentansprüche

1. Verfahren zur Herstellung von organischen Mono- oder Polyisocyanaten als Reaktionsprodukt durch Umsetzung von Aminen mit Phosgen, wobei die Vermischung von Eduktströmen aus den Aminen und dem Phosgen in flüssiger Phase nach dem Gegenstromprizip abläuft, wobei Haupt- und/oder Teilströme der Amine unter einem Zuführwinkel von α > 90° auf Haupt- und/oder Teilströme des Phosgens treffen und das Verhältnis der Impulse des Amin-Hauptstromes zu dem des Phosgen-Hauptstromes > 1 ist und das Reaktionsprodukt geschlossen abgeführt wird und wobei Edukthauptströme von Eduktteilströmen ummantelt zugeführt werden.

2. Verfahren gemäß Anspruch 1, **dadurch gekennzeichnet, dass** der Hauptstrom eines Eduktes von einem Teilstrom des anderen Eduktes ummantelt zugeführt wird.

3. Verfahren gemäß Anspruch 1, **dadurch gekennzeichnet, dass** das Reaktionsprodukt durch eine radiale Ableitung abgeführt wird.

4. Verfahren gemäß Anspruch 1, **dadurch gekennzeichnet, dass** das Reaktionsprodukt durch eine axiale Ableitung abgeführt wird.

5. Verfahren gemäß Anspruch 1, **dadurch gekennzeichnet, dass** das Reaktionsprodukt durch eine Ableitung abgeführt wird. die in einem Winkelbereich zwischen 0 und 90° bezogen auf eine Symmetrieachse orientiert ist.

6. Vorrichtung zur Herstellung von organischen Mono- oder Polyisocyanaten als Reaktionsprodukt durch Umsetzung von Aminen als erstes Edukt (1) mit Phosgen als zweites Edukt (2) in flüssiger Phase, umfassend eine Mischkonfiguration (13) mit zwei aufeinander gerichteten, in eine Mischzone mündenden Zuführkanälen (6, 7) zum Fördern von Hauptströmen (2.1, 1.1) der Edukte (1, 2) aus Aminen und Phosgen in die Mischzone und mit einer Ableitung (5, 14) im Bereich der Mischzone zum Ableiten eines Produktstromes, wobei die Zuführkanäle von den Aminen und die Zuführkanäle von dem Phosgen in einem Zuführwinkel α > 90° zueinander angeordnet sind und mindestens einer der Zuführkanäle (6, 7) mit einem Ringspalt (8, 17) umgeben ist, der eine Ringspaltöffnung (9, 20) aufweist, die in die Mischzone im Bereich der Ableitung (5) mündet, wobei der Ringspalt (8, 17) im Bereich der Ringspaltöffnung (9, 20) eine verkürzte Wandung (12.1) aufweist.

7. Vorrichtung gemäß Anspruch 6, **dadurch gekennzeichnet, dass** die verkürzte Wandung (12.1) des Ringspalts (8, 17) eine einem Zuführkanal (6, 7) zugewandte Wandung ist.

8. Vorrichtung gemäß einem der Ansprüche 6 oder 7, **dadurch gekennzeichnet, dass** die zwei Zuführkanäle (6, 7) mit je einem Ringspalt (8, 17) umgeben sind.

9. Vorrichtung gemäß Anspruch 8, **dadurch gekennzeichnet, dass** die zwei Ringspalte (8, 17) jeweils eine Ringspaltöffnung (9, 20) aufweisen, wobei die Ringspaltöffnung (9) des ersten Ringspaltes (8) gegenüberliegend zu der Ringspaltöffnung (20) des zweiten Ringspaltes (17) in die Mischzone mündet.

## Claims

1. Process for the preparation of organic mono- or polyisocyanates as a reaction product by reacting amines with phosgene, the mixing of starting material streams comprising the amines and the phosgene in the liquid phase taking place according to the countercurrent principle, the main streams and/or part-streams of the amines coming into contact with main streams and/or part-streams of the phosgene at a feed angle of α > 90° and the ratio of the angular momentum of the amine main stream to that of the phosgene main stream being > 1 and the reaction product being removed in a self-contained manner and the starting material main streams being fed in surrounded by starting material part-streams.

2. Process according to Claim 1, **characterized in that** the main stream of a starting material is fed in surrounded by a part-stream of the other starting material.

3. Process according to Claim 1, **characterized in that** the reaction product is removed through a radial discharge line.

4. Process according to Claim 1, **characterized in that** the reaction product is removed through an axial discharge line.

5. Process according to Claim 1, **characterized in that** the reaction product is removed through a discharge line which is oriented in an angular range between 0 and 90°, relative to an axis of symmetry.

6. Apparatus for the preparation of organic mono- or polyisocyanates as a reaction product by reacting amines as first starting material (1) with phosgene as second starting material (2) in the liquid phase, comprising a mixing configuration (13) having two feed channels (6, 7) which are directed towards one another, opening into a mixing zone and are intended for transporting main streams (2.1, 1.1) of the starting materials (1, 2) comprising amines and phosgene into the mixing zone and having a discharge line (5, 14) in the region of the mixing zone for discharging a product stream, the feed channels of the amines and the feed channels of the phosgene being arranged at a feed angle α > 90° to one another and at least one of the feed channels (6, 7) being surrounded by an annular gap (8, 17) which has an annular gap orifice (9, 20) which opens into the mixing zone in the region of the discharge line (5), the annular gap (8, 17) having a shortened wall (12.1) in the region of the annular gap orifice (9, 20).

7. Apparatus according to Claim 6, **characterized in that** the shortened wall (12.1) of the annular gap (8, 17) is a wall facing a feed channel (6, 7).

8. Apparatus according to either of Claims 6 and 7, **characterized in that** the two feed channels (6, 7) are each surrounded by an annular gap (8,17).

9. Apparatus according to Claim 8, **characterized in that** the two annular gaps (8, 17) each have an annular gap orifice (9, 20), the annular gap orifice (9) of the first annular gap (8) opening into the mixing zone opposite to the annular gap orifice (20) of the second annular gap (17).

## Revendications

1. Procédé pour la préparation de monoisocyanates ou de polyisocyanates organiques en tant que produits réactionnels par transformation d'amines au moyen de phosgène, le mélange de flux d'éduits des amines et du phosgène s'écoulant en phase liquide selon le principe du contre-courant, les flux principaux et/partiels des amines rencontrant, sous un angle d'amenée de α > 90°, les flux principaux et/ou partiels du phosgène et le rapport des impulsions du flux principal d'amine par rapport à celles du flux principal de phosgène étant > 1, le produit réactionnel étant évacué de manière fermée.

2. Procédé selon la revendication 1, **caractérisé en ce que** des flux principaux d'éduits sont amenés isolés de flux partiels d'éduits.

3. Procédé selon la revendication 1, **caractérisé en ce que** le produit réactionnel est évacué par une dérivation radiale.

4. Procédé selon la revendication 1, **caractérisé en ce que** le produit réactionnel est évacué par une dérivation axiale.

5. Procédé selon la revendication 1, **caractérisé en ce que** le produit réactionnel est évacué par une dérivation qui est orientée selon un axe de symétrie dans un secteur angulaire compris entre 0 et 90°.

6. Dispositif pour la préparation de monoisocyanates ou de polyisocyanates organiques en tant que produits de réaction par transformation d'amines comme premier éduit (1) avec du phosgène comme deuxième éduit (2) en phase liquide, comprenant une configuration de mélange (13) avec deux canaux d'amenée (6, 7) dirigés l'un vers l'autre, aboutissant dans une zone de mélange pour le transport de flux principaux (2.1, 1.1) des éduits (1, 2) d'amines et de phosgène dans la zone de mélange et avec une dérivation (5, 14) dans le secteur de la zone de mélange pour la dérivation d'un flux de produit, les canaux d'amenée des amines et les canaux d'amenée du phosgène étant disposés l'un par rapport à l'autre selon un angle d'amenée α > 90° et au moins l'un des canaux d'amenée (6, 7) est entouré d'un espace annulaire (8, 17) qui présente une ouverture d'espace annulaire (9, 20) qui débouche dans la zone de mélange dans le secteur de la dérivation (5), l'espace annulaire (8, 17) présentant une paroi tronquée (12.1) dans le secteur de l'ouverture de l'espace annulaire (9, 20).

7. Dispositif selon la revendication 7, **caractérisé en ce que** la paroi tronquée (12.1) de l'espace annulaire (8, 17) est une paroi tournée vers un canal d'amenée (6, 7).

8. Dispositif selon l'une des revendications 7 ou 8, **caractérisé en ce que** les deux canaux d'amenée (6, 7) sont entourés chacun d'un espace annulaire (8, 17).

9. Dispositif selon la revendication 9, **caractérisé en ce que** les deux espaces annulaires (8, 17) présentent chacun une ouverture d'espace annulaire (9, 20), d'ouverture d'espace annulaire (9) du premier espace annulaire (8) opposée à l'ouverture d'espace annulaire (20) du deuxième espace annulaire (17) débouchant dans la zone de mélange.
